# EUROPÄISCHE PATENTANMELDUNG

(11) **EP 2 301 828 A1**
(43) Veröffentlichungstag der Anmeldung: **30.03.2011**
(21) Anmeldenummer: 09012307.6
(22) Anmeldetag: 29.09.2009
(51) Int. Cl.: B62J 17/08

(54) **Aufziehbare Wetterschutzvorrichtung für Zweiräder**

(71) Anmelder: Cevikalp, Tamer, 68219 Mannheim (DE)
(72) Erfinder: Cevikalp, Tamer, 68219 Mannheim (DE)

(57) **Zusammenfassung**

Aufziehbare Wetterschutzvorrichtung für Zweiräder, gekennzeichnet durch den Aufbau aus mehreren Teleskopstangen (4, 14b), die als Stütze dienen und einem in einer Rolle (5) befindlichen Bezug (6) aus haltbarer durchsichtiger Kunststoffolie, der mittels einer angepaßten Befestigungskonstruktion (2) am Hinterteil des Fahrzeuges abnehmbar befestigt wird.

## Beschreibung

### Erfindungsgebiet

Die Erfindung bezieht sich auf eine Regenschutzvorrichtung, die an einem Fahrrad, einem Motorrad oder an einem anderen offenen Fortbewegungsmittel angebracht werden kann und bei Bedarf - z.B. im Regenfall - aufgezogen werden kann.

### Hintergrund der Erfindung

Zweiradfahrer werden naß, wenn sie bei Regenwetter fahren.

Es sind verschiedene Möglichkeiten bekannt, die Zweiradfahrer nutzen, um sich gegen die Wettereinflüsse zu schützen.

Regenumhänge haben den Nachteil, daß sie beim Fahren hinderlich sind und die Körperwärme und Körperfeuchtigkeit sich unter dem Regenumhang staut. Sie bieten kein oder wenig Schutz für den Hals und Kopfbereich.

Das einhändige Fahren mit Regenschirm erhöht die Unfallgefahr und schützt unzureichend vor Regen. Zudem besteht auch eine gewisse Unfallgefahr beim Auf- und Absteigen.

Festmotierte Verkleidungen sind klobig, teuer, schwer, unflexibel, nicht abnehmbar und schützen nicht immer genügend gegen Wettereinflüsse. Dadurch dass das Dach oder die Plane fix angebracht ist und nicht flexibel abnehmbar ist, ist der Fahrer gezwungen, auch wenn es gerade nicht regnet, mit dem Regendach oder der Plane zu fahren.

Der im Patentanspruch 1 angegebenen Erfindung liegt das Problem zugrunde, den Zweiradfahrer vor Wettereinflüssen insbesondere Regen zu schützen, die Verkehrssicherheit zu erhöhen, Flexibilität für den Zweiradfahrer zu bieten bei Regenwetter das Wetterverdeck mit nur wenigen Handgriffen aufzuziehen.

Dieses Problem wird durch die im Patentanspruch 1 aufgeführten Merkmale gelöst.

Die **Hauptvorteile** der Vorrichtung für aufziehbares Wetterverdeck für Zweiradfahrzeuge sind:
a) Die Wetterschutzvorrichtung ist flexibel in wenigen Sekunden am Zweirad montierbar und abnehmbar
b) Das Wetterverdeck ist mit wenigen Handgriffen in Sekunden aufgezogen und auch wieder mit wenigen Handgriffen hinten am Zweirad verstaut
c) Zweiradfahrer fährt nur mit Wetterverdeck, wenn es auch wirklich regnet
d) Der Zweiradfahrer braucht keine Regenbekleidung
e) Regenschutz während der Fahrt und auch im Stehen
f) Voller Regenschutz von vorne und von oben durch die durchgehende Abdeckung des Radfahrers
g) Überwiegender Regenschutz von der Seite
h) Erhöhung der Verkehrssicherheit durch den Wetterschutz und die automatische Halterung für das Wetterverdeck weil sich der Zweiradfahrer voll auf den Verkehr konzentrieren kann
i) Erhöhung der Verkehrssicherheit durch Katzenaugen an der Rolle
j) Erhöhung der Verkehrssicherheit dadurch daß die Rolle als Abstandshalter für überholende Fahrzeuge dient
k) Rolle, die das Wetterverdeck beinhaltet, ist flexibel abnehmbar
l) Wetterverdeck rollt sich automatisch mit Hilfe einer Feder wieder in die Rolle
m) Die Vorrichtung in der Ruheposition kann als Gepäckhohlraum genutzt werden

### Ein Ausführungsbeispiel wird anhand der Fig.1 bis Fig.7 erläutert.

Es zeigen:
Fig.1: Räumliche Ansicht des aufgezogenen Wetterverdecks am Beispiel eines Fahrrads
Fig.2: Vergrößerte räumliche Ansicht der nicht aufgezogenen Wetterverdeckvorrichtung hinten am Zweirad
Fig.3: Rolle aufgesteckt und hochgezogen; Ansicht von hinten
Fig.4: Rolle aufgesteckt und hochgezogen; Ansicht von oben
Fig.5: Vergrößerte Ansicht der nicht aufgezogenen Wetterverdeckvorrichtung hinten am Zweirad; seitliche Ansicht
Fig.6: Vergrößerte Ansicht der nicht aufgezogenen Wetterverdeckvorrichtung hinten am Zweirad; Ansicht von oben

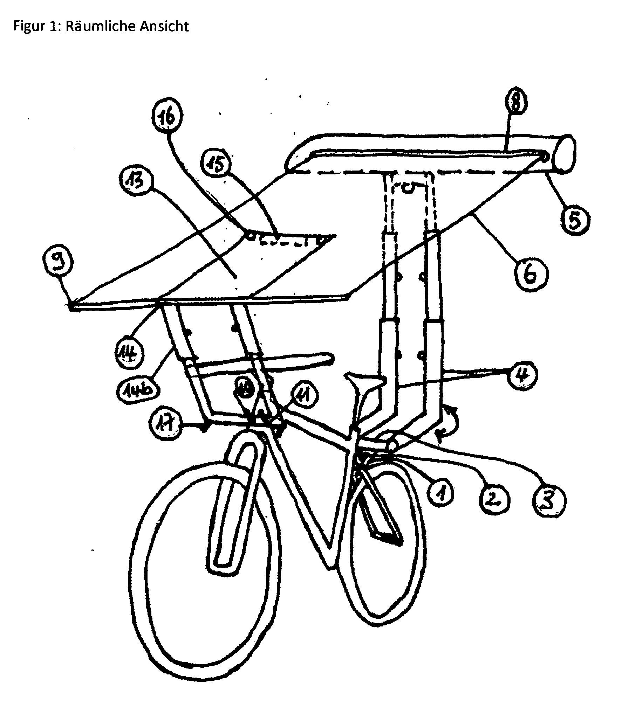

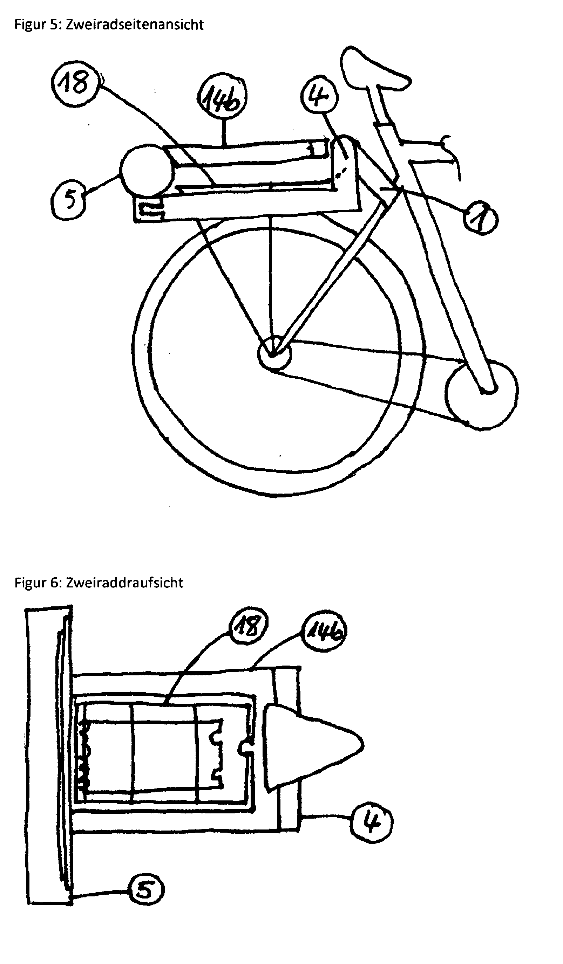

In den Figuren 1-6 sind die **wesentlichen Funktionen** der Vorrichtung für aufziehbares Wetterverdeck für Zweiradfahrzeuge **dargestellt.**

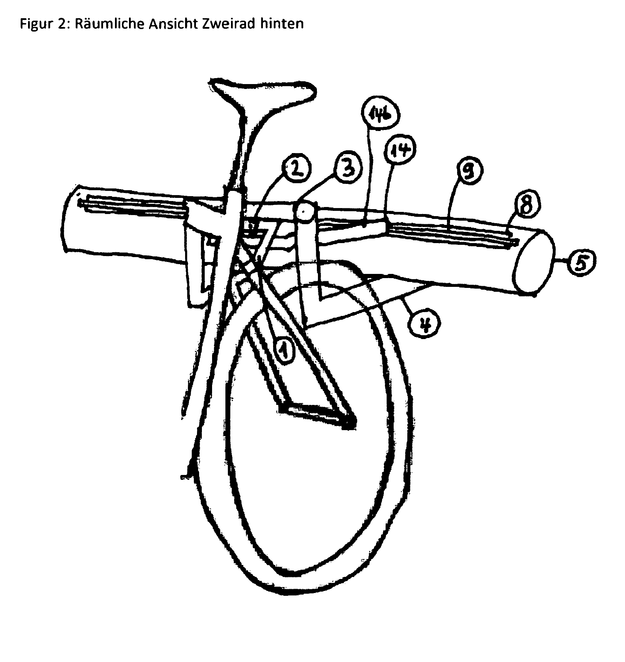

Die Figuren 2, 5 und 6 zeigen die Vorrichtung in Ruheposition; d.h. in unaufgezogenem Zustand bei Nichtregenwetter.

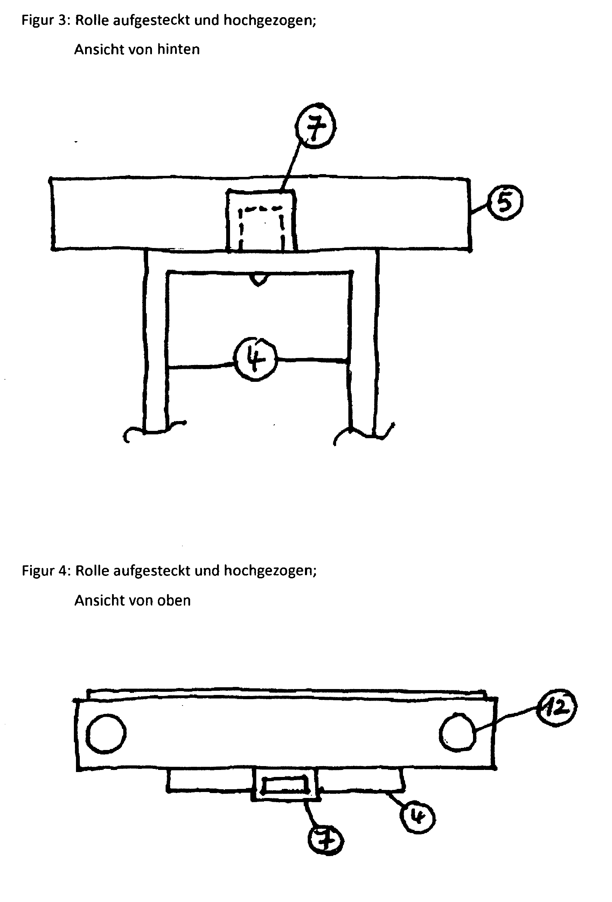

Hiernach ist hinten am Zweiradrahmen eine Halterung (1) fest verschraubt, die ein Verbindungsschlitz (2) für die Gelenkstange (3) der hinteren zwei Teleskopstangen (14b) besitzt. Es ist eine Gelenkstange (3) mit den zwei hinteren Teleskopstangen (14b), das die Gesamtkonstruktion trägt, in das Verbindungsschlitz (2) in der Halterung (1) hinten am Zweiradrahmen abnehmbar eingesteckt. Die Rolle (5), die in sich die durchsichtige Kunststofffolie (6) trägt, ist auf die hinteren Teleskopstangen (4) aufgesteckt. Die Vorderkante der Folie am Rollenschlitz (8)mit einer starren Stange (9) ist mit den vorderen zwei Teleskopstangen (14b) fest verbunden. Diese Ruheposition der 4 Teleskopstangen (4, 14b) über dem Gepäckträger bildet einen Stauraum für Gepäck. Die Rolle (5), die die Folie enthält hat an ihren Außenrändern zur Erhöhung der Sicherheit, Katzenaugen (12), was aus Figur 4 zu ersehen ist. Figuren 1, 2 und 6 zeigen u.a. die Funktionsweise der Rolle (5) als Abstandshalter für überholende Fahrzeuge.

Bei einsetzendem Regen wird die hintere Teleskopstange (4) an der Gelenkstange (3) gedreht, so daß die hinteren Teleskopstangen senkrecht stehen.

Dann werden die hinteren Teleskopstangen (4) hochgezogen und arretiert. Damit befinden sich auch die Rolle (5) und die vorderen Teleskopstangen (14b) ganz oben. Dann wird das Wetterverdeck (6)manuell an der starren Stange (9) nach vorne gezogen, die vorderen Teleskopstangen (14b) runtergezogen und am Gabelaufnahmerohr arretiert (11). Dieses nach vorne ziehen belastet die Feder in der Rolle so, dass die damit geschaffene Spannung das Wetterverdeck (6) automatisch wieder in die Rolle zieht, wenn die Arretierung (11) gelöst wird.

Um Regen von vorne abzuwehren wird noch der Klettverschluss (15) der Hilfsfolie (13) an der Hauptfolie (6) gelöst und an die vorderen Teleskopstangen (17) geklemmt.

## Patentansprüche

1. Aufziehbare Wetterschutzvorrichtung für Zweiräder, **gekennzeichnet durch** den Aufbau aus mehreren Teleskopstangen (4, 14b) und einem in einer Rolle (5) befindlichen Bezug (6) aus haltbarer durchsichtiger Kunststoffolie, der mittels einer angepaßten Befestigungskonstruktion (2) am Hinterteil des Fahrzeuges abnehmbar befestigt wird.

2. Vorrichtung nach Anspruch 1, **dadurch gekennzeichnet, daß** vorne vorzugsweise am Gabelaufnahmerohr des Zweirades und hinten vorzugsweise am Sitzstreben des Zweirades jeweils ein Halterung für die vorderen (10) und hinteren (1) Teleskopstangen fest verschraubt ist.

3. Vorrichtung nach Anspruch 1-2, **dadurch gekennzeichnet, daß** die Teleskopstangen (4, 14b) ein- und ausfahrbar und arretierbar sind und darüberhinaus die hinteren Teleskopstangen (14b) eine L-Form besitzen mit einer drehbaren und arretierbaren Gelenkstange (3) an ihrem Ende, die in ein Verbindungsschlitz (2) in einer fest verschraubten Halterung (1) hinten am Sitzstreben des Zweirades abnehmbar eingesteckt werden kann.

4. Vorrichtung nach Anspruch 1-3, **dadurch gekennzeichnet, daß** aus der Rolle manuell die Hauptfolie (6) mittels einer starren Stange (9) aus einem Rollenschlitz (8) gezogen werden kann und auf der Hauptfolie (6) sich noch eine Hilfsfolie (13) für den vorderen Bereich befindet, dessen eine Seite an der starren Stange (9) an der Vorderkante der Hauptfolie (6) und dessen andere Seite via Klettband (15) an der Hauptfolie (6) befestigt ist.

5. Vorrichtung nach Anspruch 1-4, **dadurch gekennzeichnet, daß** das Herausziehen der Hauptfolie (6) eine Feder in der Rolle derart belastet, daß die Hauptfolie(6) bei fehlender Arretierung automatisch wieder in die Rolle (5) gezogen wird.

6. Vorrichtung nach Anspruch 1-5, **dadurch gekennzeichnet, daß** das aufgezogene Verdeck (6) schräg d.h. vorne tiefer und hinten höher liegt und **dadurch** den Luftwidestand vermindert, eine stabile Fahrt gewährleistet und gegen den von vorne ankommenden Regen besser schützt

7. Vorrichtung nach Anspruch 1-6, **dadurch gekennzeichnet, daß** die unausgefahrene Position der 4 Teleskopstangen (4, 14b) über dem Gepäckträger einen Stauraum für Gepäck bildet

8. Vorrichtung nach Anspruch 1-7, **dadurch gekennzeichnet, daß** die Rolle (5), die Sicherheit des Zweiradfahrers erhöht, da sie als Abstandhalter für die überholenden Fahrzeuge fungiert und mit Katzenaugen versehen ist
